# FASCICULE DE BREVET EUROPEEN

(11) **EP 4 290 200 B1**
(45) Date de publication et mention de la délivrance du brevet: **14.08.2024**
(21) Numéro de dépôt: 23167468.0
(22) Date de dépôt: 12.04.2023
(51) Int. Cl.: G01L 3/10, B64D 35/00

(54) **DISPOSITIF D'ENTRAÎNEMENT MÉCANIQUE MUNI D'UN COUPLEMÈTRE À ROUE PHONIQUE, BOITE DE TRANSMISSION DE PUISSANCE MUNI D'UN TEL DISPOSITIF D'ENTRAÎNEMENT MÉCANIQUE ET AÉRONEF**
MECHANISCHE ANTRIEBSVORRICHTUNG MIT EINEM SCHALLRAD-DREHMOMENTMESSER, KRAFTÜBERTRAGUNGSGEHÄUSE MIT EINER SOLCHEN MECHANISCHEN ANTRIEBSVORRICHTUNG UND FLUGZEUG
MECHANICAL DRIVE DEVICE PROVIDED WITH A PHONIC WHEEL TORQUE METER, POWER TRANSMISSION BOX PROVIDED WITH SUCH A MECHANICAL DRIVE DEVICE AND AIRCRAFT

(30) Priorité: 08.06.2022 FR 2205503
(43) Date de publication de la demande: 13.12.2023
(73) Titulaire: Airbus Helicopters, 13725 Marignane Cedex (FR)
(72) Inventeur: THOMASSEY, Lionel, 13270 FOS SUR MER (FR); GUILLEMIN, Antoine, 13250 SAINT-CHAMAS (FR); LABORDE, Nadine, 13330 PELISSANNE (FR)
(74) Mandataire: GPI Brevets

(56) Documents cités:
- WO-A1-2009/141261
- FR-A1- 2 373 044
- FR-A1- 3 032 525
- US-A1- 2015 211 380
- US-A1- 2016 195 442
- US-A1- 2020 003 290
- US-B2- 9 841 333

## Description

La présente invention se situe dans le domaine des dispositifs de transmission de puissance.

La présente invention concerne un dispositif d'entraînement mécanique muni d'un couplemètre à roue phonique, ainsi qu'une boîte de transmission de puissance pour aéronef muni d'un tel dispositif d'entraînement mécanique et un aéronef comportant une telle boîte de transmission de puissance.

Un dispositif d'entraînement mécanique en rotation permet de transmettre un couple mécanique et, par suite, une puissance, entre deux éléments en rotation, par exemple entre un pignon d'entrée et un pignon de sortie.

Un tel dispositif d'entraînement mécanique peut être agencé entre un système d'entraînement, tel un moteur, relié au pignon d'entrée à l'aide par exemple d'une première roue dentée et un système récepteur, tel un rotor, relié au pignon de sortie par exemple à l'aide d'une seconde roue dentée.

Un tel dispositif d'entraînement mécanique peut aussi être agencé dans un système mécanique positionné entre un système d'entraînement et un système récepteur. Un système mécanique est par exemple une boîte de transmission mécanique de puissance d'un aéronef positionnée entre d'une part un ou plusieurs moteurs et d'autre part un ou plusieurs rotors.

Ce système mécanique peut comporter un ou plusieurs étages de démultiplication munis par exemple d'engrenages, de pignons et/ou de roues dentées. Un tel dispositif d'entraînement mécanique peut alors être agencé entre deux étages de démultiplication du système mécanique.

Par ailleurs, il est parfois utile, voire nécessaire de connaître le couple mécanique transmis par un dispositif d'entraînement mécanique. Dans ce but, un dispositif d'entraînement mécanique peut comporter un couplemètre, fournissant une information relative au couple mécanique transmis entre le pignon d'entrée et le pignon de sortie. Un tel couplemètre peut être par exemple un couplemètre à roue phonique.

Un couplemètre à roue phonique permet d'obtenir une mesure du couple transmis en comparant la position d'un arbre d'entraînement soumis à ce couple et donc susceptible de se déformer à la position d'un arbre de référence tournant de façon coaxiale et synchronisée avec l'arbre d'entraînement sans être soumis à ce couple. Dans ce but, une extrémité de l'arbre de référence est fixée de façon solidaire à l'arbre d'entraînement, de préférence à proximité de la liaison mécanique liant l'arbre d'entraînement au pignon d'entrée ou de sortie. L'autre extrémité de l'arbre de référence comporte des index, par exemple des dents ou des orifices. L'arbre d'entraînement comporte également des index à une de ses extrémités opposée à la liaison avec l'arbre de référence, et de préférence à proximité de la liaison mécanique liant l'arbre d'entraînement au pignon de sortie ou d'entrée.

Les index de l'arbre d'entraînement et de l'arbre de référence sont généralement situés à un même niveau afin d'être détectés par un même capteur lors de la rotation des arbres d'entraînement et de référence. Une torsion de l'arbre d'entraînement sous l'effet du couple mécanique transmis va alors être provoquée entre les liaisons respectives avec les pignons d'entrée et de sortie. Cette torsion peut alors être caractérisée par le décalage angulaire des index de cet arbre d'entraînement par rapport aux index de l'arbre de référence ne subissant pas une telle torsion.

Lors de la rotation de ces arbres, un capteur peut alors détecter le passage de ces index, et transmettre des informations relatives à ces passages à un calculateur de sorte que le calculateur en déduise le couple transmis selon une loi prédéterminée.

Afin d'obtenir une mesure précise du couple, le décalage angulaire entre les index doit être significatif, par exemple au minimum de quelques degrés. En conséquence, la longueur utile de l'arbre d'entraînement soumis à une déformation en torsion doit être importante. Cette longueur utile de l'arbre d'entraînement est notamment définie en fonction des valeurs de couples que le couplemètre devra mesurer. Or, l'agencement d'un arbre d'entraînement de grande longueur peut s'avérer délicat.

De plus, la liaison mécanique entre l'arbre d'entraînement et le pignon d'entrée ou de sortie qui est située à l'opposé des index est donc positionnée à proximité ou au niveau de l'extrémité de l'arbre d'entraînement. Les dimensions de cette liaison mécanique contribuent donc, avec les dimensions de l'arbre d'entraînement, à définir les dimensions du dispositif d'entraînement mécanique, et en particulier l'encombrement de ce dispositif d'entraînement mécanique le long de son axe de rotation.

Par ailleurs, l'encombrement d'une boîte de transmission mécanique de puissance peut être un paramètre important et imposé notamment lorsque la boîte de transmission mécanique de puissance équipe un véhicule et en particulier un aéronef. En conséquence, l'utilisation d'un dispositif d'entraînement mécanique muni d'un couplemètre à roue phonique dans une telle boîte de transmission mécanique de puissance peut s'avérer complexe.

En outre, lorsque les dimensions de la boîte de transmission mécanique de puissance sont limitées, les dimensions de la liaison mécanique entre l'arbre d'entraînement et le pignon d'entrée ou de sortie peuvent imposer que cette liaison mécanique soit située à proximité, voire en dessous du niveau d'un liquide de lubrification de la boîte de transmission mécanique de puissance, provoquant alors un phénomène de barbotage qui peut être pénalisant pour le fonctionnement de cette liaison mécanique, en provoquant par exemple une dilatation des pièces de la liaison mécanique avec le liquide de lubrification plus chaude que la température à l'intérieur de la boîte de transmission mécanique de puissance.

L'arrière plan technologique de l'invention comporte notamment les documents US 2016/0195442, US 2020/0003290, US 9841333, FR 2373044, WO 2009/141261, FR 3032525 et US 2015/0211380.

La présente invention a alors pour but de proposer une solution alternative pour l'entraînement mécanique des éléments d'un tel dispositif d'entraînement mécanique visant à limiter l'encombrement axial du dispositif d'entraînement mécanique.

La présente invention a par exemple pour objet un dispositif mécanique comprenant un pignon d'entrée et un pignon de sortie mobiles en rotation autour d'un axe de rotation AX, un arbre intermédiaire s'étendant longitudinalement le long de l'axe de rotation AX d'une première extrémité proximale jusqu'à une première extrémité distale, une première liaison mécanique connectant l'arbre intermédiaire et le pignon d'entrée, une deuxième liaison mécanique connectant la première extrémité distale de l'arbre intermédiaire et le pignon de sortie, le dispositif mécanique comprenant un couplemètre coopérant avec l'arbre intermédiaire.

Le dispositif mécanique selon l'invention est remarquable en ce que le couplemètre est un couplemètre à roue phonique muni d'un arbre de référence s'étendant longitudinalement le long de l'axe de rotation AX d'une seconde extrémité proximale jusqu'à une seconde extrémité distale, l'arbre de référence étant agencé au moins partiellement à l'intérieur de l'arbre intermédiaire et étant coaxial à l'arbre intermédiaire, la seconde extrémité distale de l'arbre de référence étant connectée à l'arbre intermédiaire, le couplemètre comportant au moins un index de mesure solidaire de l'arbre intermédiaire et agencé à la première extrémité proximale ainsi qu'au moins un index de référence solidaire de l'arbre de référence et agencé à la seconde extrémité proximale.

Le dispositif mécanique selon l'invention est également remarquable en ce que l'arbre intermédiaire est coaxial avec le pignon d'entrée et avec le pignon de sortie autour de l'axe de rotation AX et que la deuxième liaison mécanique d'entraînement en rotation comporte une série de premières dents agencées sur la première extrémité distale de l'arbre intermédiaire et une série de deuxièmes dents agencées sur le pignon de sortie, autour des premières dents au regard de l'axe de rotation AX, un anneau d'entraînement comportant une série de dents de liaison séparées par des espaces interdents radiaux, chaque première dent et chaque deuxième dent étant en contact avec les dents de liaison dans un espace interdent radial, et un dispositif de fixation liant axialement selon l'axe de rotation AX l'anneau d'entraînement avec l'arbre intermédiaire et le pignon de sortie.

De la sorte, le pignon d'entrée et le pignon de sortie sont liés mécaniquement en rotation autour de l'axe de rotation AX par l'intermédiaire de la première liaison mécanique, de l'arbre intermédiaire et de la deuxième liaison mécanique.

La première liaison mécanique d'entraînement en rotation peut être une liaison mécanique permanente ou non permanente, par exemple débrayable. Le pignon d'entrée et l'arbre intermédiaire sont ainsi entraînés autour de l'axe de rotation AX via la première liaison mécanique de façon synchrone et coaxiale.

La deuxième liaison mécanique d'entraînement est une liaison mécanique permanente. Le pignon de sortie et l'arbre intermédiaire sont ainsi entraînés autour de l'axe de rotation AX via la deuxième liaison mécanique de façon synchrone et coaxiale.

L'implantation du couplemètre dans le dispositif mécanique selon l'invention permet de connaître en permanence le couple mécanique transmis entre le pignon d'entrée et le pignon de sortie.

L'anneau d'entraînement de la deuxième liaison mécanique est de forme annulaire autour de l'axe de rotation AX et comporte donc un orifice en son centre. L'anneau d'entraînement permet de transmettre un couple mécanique entre l'arbre intermédiaire et le pignon de sortie, via les premières dents, les deuxièmes dents et les dents de liaison. Chaque première dent s'étend d'un pied de dent vers un sommet de dent parallèlement à l'axe de rotation AX. De même, chaque dent de liaison s'étend d'un pied de dent vers un sommet de dent parallèlement à l'axe de rotation AX. Pour chaque dent, le pied de dent relie cette dent au corps de la pièce comportant cette dent, à savoir le corps de l'arbre intermédiaire pour une première dent et le corps de l'anneau d'entraînement pour une dent de liaison. Un sommet de dent est l'extrémité libre d'une dent.

Les premières dents agencées sur la première extrémité distale de l'arbre intermédiaire coopèrent et sont en contact avec les dents de liaison de l'anneau d'entraînement. Chaque première dent est située dans un espace interdent radial entre deux dents de liaison tout en étant en contact avec ces deux dents de liaison. Les premières dents et les dents de liaison s'emboîtent entre elles ainsi axialement, parallèlement à l'axe de rotation AX et non radialement comme dans le cas d'un engrènement entre un pignon et une roue dentée ou avec des cannelures par exemple. Le couple mécanique est ainsi transmis entre l'arbre intermédiaire et l'anneau d'entraînement.

Les deuxièmes dents agencées sur le pignon de sortie coopèrent et sont en contact avec les dents de liaison de l'anneau d'entraînement. Les deuxièmes dents sont situées à l'extérieur des premières dents au regard de l'axe de rotation AX. De façon similaire aux premières dents, chaque deuxième dent s'étend d'un pied de dent vers un sommet de dent parallèlement à l'axe de rotation AX. Chaque deuxième dent est située dans un espace interdent radial entre deux dents de liaison tout en étant en contact avec ces deux dents de liaison. Les deuxièmes dents et les dents de liaison s'emboîtent entre elles ainsi également axialement, parallèlement à l'axe de rotation AX. Le couple mécanique est ainsi transmis entre l'anneau d'entraînement et le pignon de sortie.

De la sorte, l'arbre intermédiaire, l'anneau d'entraînement et le pignon de sortie sont entraînés autour de l'axe de rotation de façon synchrone et coaxiale.

Un dispositif de fixation assure une liaison axiale selon l'axe de rotation AX entre l'anneau d'entraînement, l'arbre intermédiaire et le pignon de sortie, maintenant ainsi les premières et deuxièmes dents dans des espaces interdents radiaux entre deux dents de liaison.

Dans cette deuxième liaison mécanique, il n'y a aucun mouvement relatif entre les premières dents et les dents de liaison ainsi qu'entre les deuxièmes dents et les dents de liaison, grâce notamment au serrage axial, opéré par le dispositif de fixation, entre l'anneau d'entraînement, l'arbre intermédiaire et le pignon de sortie.

En conséquence, une rotation du pignon d'entrée peut ainsi entraîner une rotation du pignon de sortie de façon synchrone et coaxiale avec le pignon d'entrée selon le type de la première liaison mécanique utilisée. Le pignon d'entrée est alors relié via une roue dentée ou un dispositif de démultiplication à un système d'entraînement, tel un moteur par exemple. Le pignon de sortie est quant à lui relié, via une roue dentée ou un dispositif de démultiplication, à un système récepteur, tel un rotor par exemple.

Le dispositif mécanique selon l'invention permet notamment de transmettre un mouvement de rotation et un couple mécanique entre le pignon d'entrée et le pignon de sortie avec un encombrement axial minimum, en particulier grâce à la deuxième liaison mécanique, tout en permettant la transmission d'un couple mécanique important.

Le dispositif mécanique selon l'invention peut comporter une ou plusieurs des caractéristiques qui suivent, prises seules ou en combinaison.

Selon une possibilité, la première liaison mécanique d'entraînement en rotation peut être une liaison permanente. Par exemple, la première liaison mécanique peut comporter une ou plusieurs clavettes, une ou plusieurs goupilles ou des cannelures.

Alternativement, la première liaison mécanique d'entraînement en rotation peut être une liaison débrayable.

Par exemple, la première liaison mécanique peut comprendre une roue libre autorisant uniquement un entraînement du pignon de sortie par le pignon d'entrée, le pignon d'entrée étant alors relié à un système d'entraînement, et le pignon de sortie étant relié à un système récepteur.

La première liaison mécanique peut de façon alternative comprendre une roue libre autorisant uniquement un entraînement du pignon d'entrée par le pignon de sortie dans un seul sens de rotation autour de l'axe de rotation AX. Le pignon de sortie est alors relié à un système d'entraînement, et le pignon d'entrée est relié à un système récepteur.

Selon une autre possibilité compatible avec la précédente, les premières dents et les deuxièmes dents peuvent être de forme convexe et les dents de liaison peuvent être de forme concave dans un plan perpendiculaire à l'axe de rotation AX. Les premières dents et les deuxièmes dents sont de formes identiques, la forme des dents de liaison étant complémentaire aux formes des premières et deuxièmes dents. De la sorte, les contacts d'une part entre les premières dents et les dents de liaison et d'autre part entre les deuxièmes dents et les dents de liaison sont réalisés sur une surface permettant ainsi la transmission d'un couple mécanique important, tout en limitant l'usure ou le matage des premières dents, des deuxièmes dents et des dents de liaison. Ces formes des premières dents, des deuxièmes dents et des dents de liaison permettent également d'assurer avantageusement une coaxialité entre l'arbre intermédiaire et le pignon de sortie.

Alternativement, les premières dents et les deuxièmes dents peuvent être de forme concave et les dents de liaison peuvent être de forme convexe dans un plan perpendiculaire à l'axe de rotation AX. Les premières dents et les deuxièmes dents sont de formes identiques, la forme des dents de liaison étant complémentaire aux formes des premières et deuxièmes dents.

Par exemple, les premières dents, les deuxièmes dents et les dents de liaison sont de type Curvic^{®}.

Selon une autre possibilité compatible avec les précédentes, chaque espace interdent peut accueillir une première dent et une deuxième dent, chaque espace interdent étant en vis-à-vis longitudinalement d'une première dent et d'une deuxième dent. Le couple mécanique transmis entre l'arbre intermédiaire et le pignon de sortie peut alors être maximisé.

Selon une autre possibilité compatible avec les précédentes, les premières dents, les deuxièmes dents et les dents de liaison peuvent s'étendre chacune en azimut par rapport à l'axe de rotation AX entre deux faces inclinées. Chacune des faces est ainsi inclinée par rapport à une direction parallèle à l'axe de rotation AX selon un angle compris entre 5 et 15 degrés (5° et 15°). En effet, une intersection de ces flancs avec un plan parallèle à l'axe de rotation et tangent à un cercle centré sur l'axe de rotation AX forme un angle compris entre 5° et 15° avec une droite de ce plan parallèle à l'axe de rotation AX.

Cet angle compris entre 5° et 15° est par exemple plus faible que l'angle utilisé traditionnellement pour les systèmes de transmission de type Curvic^{®}, qui est de l'ordre de 30°. Ce faible angle permet d'augmenter le nombre de dents portées par l'anneau d'entraînement, l'arbre intermédiaire et le pignon de sortie au niveau de la deuxième liaison mécanique.

Selon une autre possibilité compatible avec les précédentes, chaque dent de liaison peut comporter radialement deux dents séparées par un espace de séparation, les deux dents comportant une dent de liaison interne et une dent de liaison externe, les dents de liaison externes étant situées autour des dents de liaison internes au regard de l'axe de rotation AX. Les dents de liaison internes coopèrent ainsi avec les premières dents et les dents de liaison externes coopèrent avec les deuxièmes dents.

Les dents de liaison internes coopèrent ainsi uniquement avec les premières dents alors que les dents de liaison externe coopèrent uniquement avec les deuxièmes dents, les dents de liaison internes étant situées entre les dents de liaison externes et l'axe de rotation AX. L'espace de séparation comporte une rainure en arc de cercle centrée sur l'axe de rotation AX.

Selon une autre possibilité compatible avec les précédentes, le dispositif de fixation peut comporter une vis et un écrou, la vis comportant une surface cylindrique extérieure filetée coopérant avec une surface cylindrique intérieure taraudée de l'arbre intermédiaire, l'anneau d'entraînement étant agencé entre la vis et l'arbre intermédiaire, l'écrou comportant une surface cylindrique intérieure taraudée coopérant avec une surface extérieure filetée du pignon de sortie, l'anneau d'entraînement étant agencé entre l'écrou et le pignon de sortie.

Ce dispositif de fixation permet ainsi de maintenir axialement selon l'axe de rotation AX l'anneau d'entraînement, l'arbre intermédiaire et le pignon de sortie malgré les efforts axiaux pouvant apparaître au niveau des premières dents, des deuxièmes dents et des dents de liaison.

Selon une autre possibilité compatible avec les précédentes, le couplemètre peut comporter un capteur et un calculateur, le capteur étant configuré pour mesurer des positions angulaires relatives dudit au moins un index de mesure et dudit au moins un index de référence par rapport à l'axe de rotation AX, le calculateur étant configuré pour déterminer un couple mécanique transmis entre le pignon d'entrée et le pignon de sortie en fonction des positions angulaires relatives. Un étalonnage du couplemètre peut être effectué pour déterminer les dilatations thermiques des composants du dispositif mécanique selon l'invention survenant lors du fonctionnement du dispositif mécanique et prendre en compte ces dilatations thermiques pour déterminer leurs effets sur les positions angulaires relatives dudit au moins un index de mesure et dudit au moins un index de référence, et par suite sur les valeurs des couples mesurés.

Le calculateur peut par exemple être configuré pour appliquer une loi prédéterminée, établie par exemple par essais ou simulation, reliant lesdites positions angulaires relatives et le couple mécanique transmis entre le pignon d'entrée et le pignon de sortie. Cette loi prédéterminée prend notamment en compte les dilations thermiques des composants du dispositif mécanique.

Selon une autre possibilité compatible avec les précédentes, ledit au moins un index de mesure et ledit au moins un index de référence peuvent être agencés dans un premier plan P perpendiculaire à l'axe de rotation AX. De la sorte, un même capteur peut détecter le passage dudit au moins un index de mesure et dudit au moins un index de référence et en déduire des positions angulaires relatives dudit au moins un index de mesure et dudit au moins un index de référence, et par suite un décalage angulaire entre un index de mesure et un index de référence.

Selon une autre possibilité compatible avec les précédentes, l'arbre intermédiaire peut être agencé au moins partiellement à l'intérieur du pignon d'entrée et du pignon de sortie.

Selon une autre possibilité compatible avec les précédentes, l'arbre de référence peut être lié à l'arbre intermédiaire par une liaison de type encastrement à zéro degré de liberté, comportant par exemple au moins une clavette, au moins une goupille ou des cannelures ou encore un frettage...

La présente invention vise également une boîte de transmission de puissance comportant un dispositif mécanique tel que précédemment décrit. La boîte de transmission de puissance comporte un carter dans lequel est agencé le dispositif mécanique et au fond duquel est situé un liquide de lubrification. La deuxième liaison mécanique est positionnée au-dessus du liquide de lubrification lorsque la boîte de transmission de puissance se trouve à une position de référence.

En effet, aucun mouvement relatif n'étant présent entre les premières dents et les dents de liaison ainsi qu'entre les deuxièmes dents et les dents de liaison, aucune lubrification de la deuxième liaison mécanique n'est nécessaire. De plus, le faible encombrement axial de la deuxième liaison mécanique évite, malgré une longueur minimale significative de l'arbre intermédiaire nécessaire pour permettre une mesure précise du couple transmis, que cette deuxième liaison mécanique soit situé en dessous du niveau de liquide de lubrification, et donc au moins partiellement dans le liquide de lubrification, évitant de plus le phénomène de barbotage de la deuxième liaison mécanique dans le liquide de lubrification.

La position de référence est par exemple une position horizontale de la boîte de transmission de puissance dans un repère terrestre, par exemple lorsqu'un véhicule comportant cette boîte de transmission de puissance est arrêté sur un sol horizontal.

La présente invention vise enfin un aéronef comportant une boîte de transmission de puissance telle que précédemment décrite, la boîte de transmission de puissance étant agencée entre au moins un moteur et au moins un rotor de l'aéronef.

Un tel aéronef est par exemple un aéronef à voilure tournante comportant un ou plusieurs moteurs et un ou plusieurs rotors, tels qu'un rotor de sustentation et un rotor auxiliaire anticouple ainsi qu'une boîte de transmission de puissance permettant au ou aux moteurs d'entraîner en rotation le ou les rotors.

L'invention et ses avantages apparaîtront avec plus de détails dans le cadre de la description qui suit avec des exemples donnés à titre illustratif en référence aux figures annexées qui représentent :
- la figure 1, un aéronef selon l'invention,
- la figure 2, une vue en coupe d'un dispositif mécanique selon l'invention,
- la figure 3, une vue en perspective d'un arbre intermédiaire du dispositif mécanique selon la figure 2,
- la figure 4, une vue en perspective d'un pignon de sortie du dispositif mécanique selon la figure 2,
- la figure 5, une vue en perspective d'un anneau d'entraînement du dispositif mécanique selon la figure 2,
- la figure 6, une vue en coupe de la deuxième liaison mécanique du dispositif mécanique selon la figure 2,
- la figure 7, une vue en perspective d'une variante de l'anneau d'entraînement, et
- la figure 8, une vue en coupe d'une boîte de transmission de puissance selon l'invention.

Les éléments présents dans plusieurs figures distinctes sont affectés d'une seule et même référence.

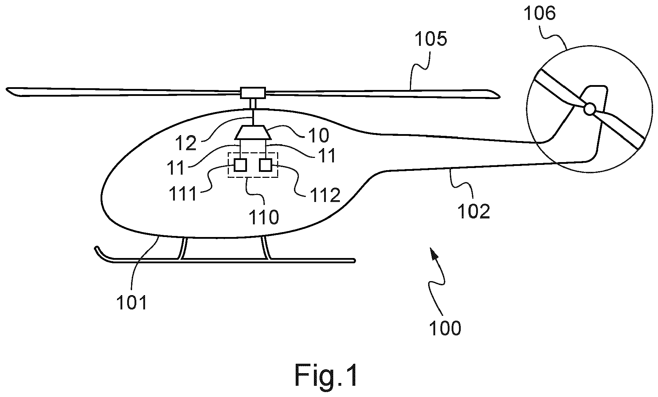

La figure 1 représente un aéronef 100 à voilure tournante de type giravion. Cet aéronef 100 peut comporter une cellule 101, un rotor principal 105 participant au moins partiellement à la sustentation de l'aéronef 100 et éventuellement un rotor auxiliaire 106 agencé à l'extrémité d'une poutre de queue 102 ainsi qu'une boîte de transmission de puissance 10. La boîte de transmission de puissance 10 est entraînée en rotation par une installation motrice 110 munie d'au moins un moteur 111,112 et entraîne en rotation le rotor principal 105 ainsi qu'éventuellement le rotor auxiliaire 106 permettant ainsi de transmettre une puissance mécanique du ou des moteurs 111,112 au rotor principal 105 ainsi qu'éventuellement au rotor auxiliaire 106.

Par exemple et dans ce cadre, la boîte de transmission de puissance 10 comporte d'une part, au moins un arbre d'entrée 11 relié à l'installation motrice 110 et d'autre part, un mat 12 relié au rotor principal 105. Un arbre de sortie (non représenté) de la boîte de transmission de puissance 10 peut aussi être relié au rotor auxiliaire 106.

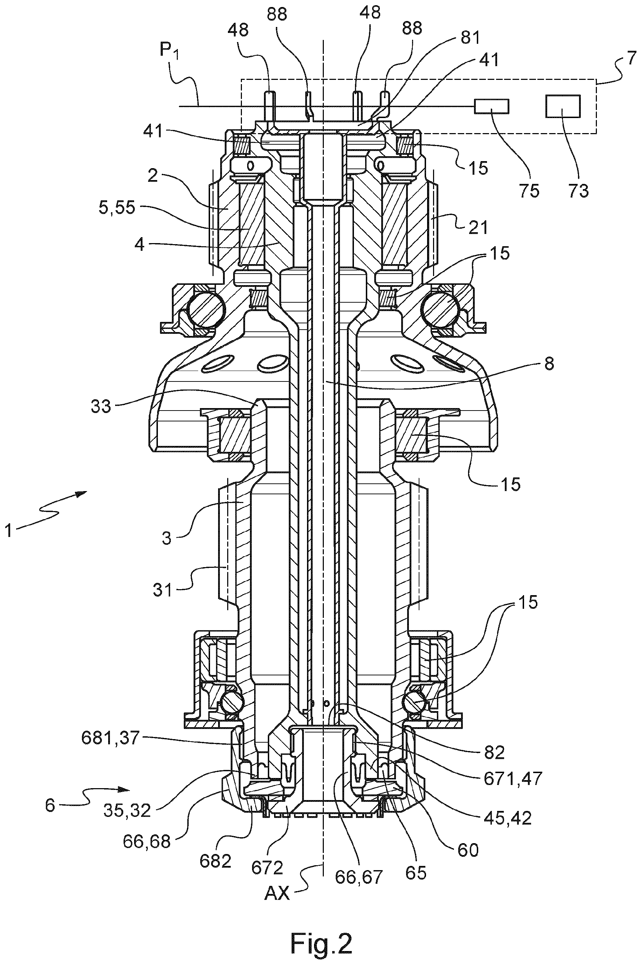

La boîte de transmission de puissance 10 peut comporter un ou plusieurs étages de démultiplication munis par exemple d'engrenages, de pignons et/ou de roues dentées. La boîte de transmission de puissance 10 peut aussi comporter un dispositif mécanique 1 agencé par exemple entre deux étages de démultiplication. Une vue en coupe de ce dispositif mécanique 1 est représentée sur la figure 2.

Le dispositif mécanique 1 peut alternativement être agencé dans tout système mécanique, muni de pignons et/ou de roues dentées et équipant par exemple un véhicule ou une machine.

Le dispositif mécanique 1 comporte un pignon d'entrée 2 et un pignon de sortie 3 mobiles en rotation autour d'un axe de rotation AX. L'axe de rotation AX est situé dans le plan de coupe de la vue représentée sur la figure 2. Le pignon d'entrée 2 comporte des dents 21 qui peuvent par exemple être reliées via une roue dentée ou un dispositif de démultiplication à un système d'entraînement. Le pignon de sortie 3 comporte des dents 31 qui peuvent être reliées via une roue dentée ou un dispositif de démultiplication à un système récepteur.

Selon l'exemple représenté sur les figures, le pignon d'entrée 2 peut être relié via deux roues dentées aux deux arbres d'entrée 11 et, par suite, aux deux moteurs 111,112 de l'installation motrice 110 alors que le pignon de sortie 3 peut être relié via un dispositif de démultiplication au mât 12 et, par suite, au rotor 105,106.

Alternativement, le pignon d'entrée 2 et le pignon de sortie 3 peuvent être inversés, le pignon de sortie 3 peut alors être relié au moins à un arbre d'entrée 11 puis à un système d'entraînement alors que le pignon d'entrée 2 peut être relié à un mât 12 puis à un système récepteur.

Le dispositif mécanique 1 comporte également un arbre intermédiaire 4 s'étendant longitudinalement le long de l'axe de rotation AX, d'une première extrémité proximale 41 jusqu'à une première extrémité distale 42. L'arbre intermédiaire 4 s'étend au moins partiellement à l'intérieur du pignon d'entrée 2 et du pignon de sortie 3, en étant coaxial avec le pignon d'entrée 2 et avec le pignon de sortie 3, autour de l'axe de rotation AX.

Le dispositif mécanique 1 comporte des dispositifs de guidage en rotation 15, tels que des roulements à billes ou à rouleaux par exemple. De tels dispositifs de guidage en rotation 15 sont par exemple agencés entre le pignon d'entrée 2 et l'arbre intermédiaire 4, entre le pignon d'entrée 2 et le pignon de sortie 3, entre un bâti (non représenté par souci de clarté de la figure 2) du dispositif mécanique 1 et le pignon d'entrée 2, et entre ce bâti et le pignon de sortie 3. Les pistes de ces dispositifs de guidage en rotation 15 peuvent être intégrées à ces composants 2, 3, 4 du dispositif mécanique 1 ou bien être rapportées, ces dispositifs de guidage en rotation 15 comportant alors par exemple une bague intérieure et/ou une bague extérieure.

Le dispositif mécanique 1 comporte aussi une première liaison mécanique 5, une deuxième liaison mécanique 6 et un couplemètre 7.

La première liaison mécanique 5 solidarise au moins en rotation autour de l'axe de rotation AX le pignon d'entrée 2 avec l'arbre intermédiaire 4, de préférence à proximité de la première extrémité proximale 41. La première liaison mécanique 5 d'entraînement en rotation peut être une liaison permanente de sorte que le pignon d'entrée 2 et le pignon de sortie 3 sont en permanence reliés au moins en rotation l'un à l'autre. La première liaison mécanique 5 peut comporter dans ce cas des cannelures ou bien une ou plusieurs clavettes ou encore une ou plusieurs goupilles par exemple. La première liaison mécanique 5 peut aussi être une liaison de type encastrement à zéro degré de liberté.

Alternativement, la première liaison mécanique 5 d'entraînement en rotation peut être une liaison débrayable. Par exemple, la première liaison mécanique 5 peut comporter une roue libre 55, une partie interne de la roue libre 55 étant reliée à l'arbre intermédiaire 4 et une partie externe de la roue libre 55 étant reliée au pignon d'entrée 2. La roue libre 55 autorise ainsi par exemple uniquement un entraînement du pignon de sortie 4 par le pignon d'entrée 2 selon un sens de rotation autour de l'axe de rotation AX.

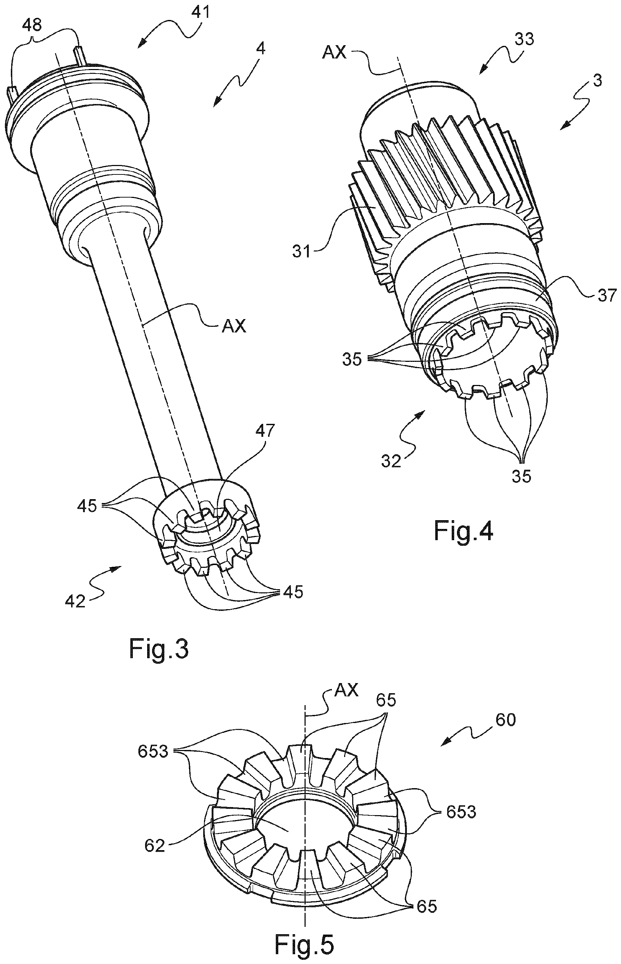

La deuxième liaison mécanique 6 permet de solidariser en rotation autour de l'axe de rotation AX l'arbre intermédiaire 4 et le pignon de sortie 3 à l'aide d'un anneau d'entraînement 60. Des vues individuelles en perspective de l'arbre intermédiaire 4, du pignon de sortie 3 et de l'anneau d'entraînement 60 sont représentées respectivement sur les figures 3, 4 et 5.

L'arbre intermédiaire 4 comporte des premières dents 45 agencées à la première extrémité distale 42 et un alésage débouchant sur la première extrémité distale 42. Cet alésage comporte une surface cylindrique intérieure 47 taraudée. Les premières dents 45 s'étendent d'un pied de dent vers un sommet de dent parallèlement à l'axe de rotation AX.

Le pignon de sortie 3 comporte une extrémité proximale 33 et une extrémité distale 32 ainsi que des deuxièmes dents 35 agencées à l'extrémité distale 32 et une surface extérieure 37 filetée et située à proximité des deuxièmes dents 35, voire étant adjacente aux deuxièmes dents 35. Les deuxièmes dents 35 s'étendent d'un pied de dent vers un sommet de dent parallèlement à l'axe de rotation AX.

L'anneau d'entraînement 60 comporte des dents de liaison 65 séparées par des espaces interdents 653 radiaux et un orifice cylindrique 62. Les dents de liaisons 65 s'étendent d'un pied de dent vers un sommet de dent parallèlement à l'axe de rotation AX

Les premières dents 45 coopèrent ainsi avec les dents de liaison 65 afin de lier en rotation l'arbre intermédiaire 4 et l'anneau d'entraînement 60. Chaque première dent 45 occupe un espace interdent 653 radial, en étant en contact avec les dents de liaison 65 dans cet espace interdent 653. Les premières dents 45 et les dents de liaison 65 s'engrènent ainsi entre elles axialement, parallèlement à l'axe de rotation AX.

Les deuxièmes dents 35 coopèrent avec les dents de liaison 65, les deuxièmes dents 35 étant positionnées autour des premières dents 45 au regard de l'axe de rotation AX, afin de lier en rotation le pignon de sortie 3 et l'anneau d'entraînement 60. Chaque deuxième dent 35 occupe un espace interdent 653 radial, en étant en contact avec les dents de liaison 65 dans cet espace interdent 653. Les deuxièmes dents 35 et les dents de liaison 65 s'engrènent ainsi entre elles axialement, parallèlement à l'axe de rotation AX.

La deuxième liaison mécanique 6 comporte ainsi les premières dents 45, les deuxièmes dents 35 et les dents de liaison 65 ainsi que l'anneau d'entraînement 60 lui-même.

Dans l'exemple représenté, chaque espace interdent 653 est situé vis-à-vis d'une première dent 45 et une deuxième dent 35 longitudinalement le long de l'axe de rotation AX. Chaque espace interdent 653 accueille ainsi une première dent 45 et une deuxième dent 35.

La deuxième liaison mécanique 6 comporte aussi un dispositif de fixation 66 maintenant axialement selon l'axe de rotation AX l'anneau d'entraînement 60 avec l'arbre intermédiaire 4 et le pignon de sortie 3, et par suite les premières dents 45 et les deuxièmes dents 35 dans les espaces interdents 653, et donc en contact avec les dents de liaison 65.

Le dispositif de fixation 66 comporte une vis 67 et un écrou 68 représentés sur la figure 2. La vis 67 comporte une surface cylindrique extérieure 671 filetée et une tête 672. La surface cylindrique extérieure 671 filetée est configurée pour être assemblée avec la surface cylindrique intérieure 47 taraudée de l'arbre intermédiaire 4, cette surface cylindrique extérieure 671 traversant l'orifice cylindrique 62 de l'anneau d'entraînement 60. La tête 672 est alors en appui contre l'anneau d'entraînement 60 maintenant ainsi l'anneau d'entraînement 60 contre l'arbre intermédiaire 4. L'anneau d'entraînement 60 est ainsi positionné entre la vis 67 et l'arbre intermédiaire 4.

L'écrou 68 comporte une surface cylindrique intérieure 681 taraudée et une collerette 682. La surface cylindrique intérieure 681 taraudée est configurée pour être assemblée avec la surface cylindrique extérieure 37 filetée du pignon de sortie 3, cette surface cylindrique intérieure 681 étant positionnée à l'extérieur de l'anneau d'entraînement 60 au regard de l'axe de rotation AX. La collerette 682 est alors en appui contre l'anneau d'entraînement 60 maintenant ainsi l'anneau d'entraînement 60 contre le pignon de sortie 3. L'anneau d'entraînement 60 est ainsi positionné entre l'écrou 68 et le pignon de sortie 3.

Le couplemètre 7 est un couplemètre à roue phonique et permet de mesurer un couple transmis entre le pignon d'entrée 2 et le pignon de sortie 3. Ce couplemètre 7 comporte au moins un index de mesure 48 solidaire de l'arbre intermédiaire 4 et agencé à la première extrémité proximale 41 et un arbre de référence 8 s'étendant longitudinalement le long de l'axe de rotation AX d'une seconde extrémité proximale 81 jusqu'à une seconde extrémité distale 82. L'arbre de référence 8 est muni d'au moins un index de référence 88 positionné à la seconde extrémité proximale 81. Le ou les index de mesure 48 et le ou les index de référence 88 sont agencés de préférence de sorte qu'un premier plan P1 perpendiculaire à l'axe de rotation AX coupe le ou les index de mesure 48 et le ou les index de référence 88.

Un tel index de mesure 48 peut comporter par exemple une excroissance, telle une dent dépassant d'un anneau formant la première extrémité proximale 41 de l'arbre intermédiaire 4 ou une forme en saillie du flanc de cet anneau. Un tel index de mesure 48 peut alternativement comporter une rainure creusée dans le flanc de la première extrémité proximal 41 ou d'autres formes en creux.

L'index de référence 88 peut être similaire, voire identique à l'index de mesure 48. Par exemple, si l'index de mesure 48 comporte une excroissance, l'index de référence 88 comporte également une excroissance. Alternativement, si l'index de mesure 48 comporte une rainure creusée, l'index de référence 88 comporte également une rainure creusée. De plus, les nombres d'index de référence 88 et d'index de mesure 48 sont égaux. Par exemple, l'arbre intermédiaire 4 peut comporter quatre index de mesure 48 et l'arbre de référence 8 peut comporter quatre index de référence 88 équirépartis autour de l'axe de rotation AX.

L'arbre de référence 8 est coaxial à l'arbre intermédiaire 4 et agencé au moins partiellement à l'intérieur de l'arbre intermédiaire 4. Par exemple, seuls le ou les index de référence 88 peuvent être agencés à l'extérieur de l'arbre intermédiaire 4, au-delà de la première extrémité proximale 41. L'arbre de référence 8 est solidarisé à l'arbre intermédiaire 4 au niveau de la seconde extrémité distale 82, et à proximité de la première extrémité distale 42, par exemple par une liaison de type encastrement à zéro degré de liberté.

De la sorte, lors de l'entraînement du pignon de sortie 3 par le pignon d'entrée 2, l'arbre intermédiaire 4 se déforme en torsion entre la première liaison mécanique 5 et la deuxième liaison mécanique 6, et donc sensiblement entre la première extrémité proximale 41 et la première extrémité distale 42 sous l'effet du couple transmis entre le pignon d'entrée 2 et le pignon de sortie 3. L'arbre de référence 8 est fixé à l'arbre intermédiaire 4 uniquement au niveau de la seconde extrémité distale 82 et n'est donc soumis à aucune déformation, si ce n'est celle induite par la vitesse de rotation de l'arbre de référence 8 qui est très faible et peut à ce titre être négligée. En conséquence, un décalage angulaire apparaît entre un index de mesure 48 et un index de référence 88, par rapport aux positions de ces index de mesure 48 et de référence 88 lorsque les arbres intermédiaire 4 et de référence 8 sont fixes autour de l'axe de rotation AX. Ce décalage angulaire est alors fonction du couple transmis entre le pignon d'entrée 2 et le pignon de sortie 3.

Afin de mesurer ce décalage angulaire, le couplemètre 7 peut comporter au moins un capteur 75 et un calculateur 73. Le capteur 75 peut être configuré pour mesurer les positions angulaires relatives dudit au moins un index de mesure 48 et dudit au moins un index de référence 88 par rapport à l'axe de rotation AX, par exemple dans le plan P1. Alternativement, le capteur 75 peut être configuré pour mesurer les positions angulaires absolues dans un repère lié au dispositif mécanique 1 du ou des index de mesure 48 et du ou des index de référence 88 par rapport à l'axe de rotation AX, par exemple dans le plan P1. Un seul capteur 75 peut être suffisant. L'utilisation de plusieurs capteurs 75 peut permettre une redondance des mesures et/ou l'utilisation d'une valeur moyenne de ces mesures par exemple.

Le capteur transmet ensuite au calculateur 73 au moins un signal, numérique ou analogique, électrique ou optique, porteur d'informations relatives à ces positions angulaires, par exemple par une liaison filaire ou sans fil. Le calculateur 73 traite ces informations et détermine le couple mécanique transmis entre le pignon d'entrée 2 et le pignon de sortie 3 en appliquant par exemple une loi prédéterminée en fonction des positions angulaires mesurées.

Pour fournir une valeur précise et fiable du couple transmis, le décalage angulaire entre un index de mesure 48 et un index de référence 88 doit être significatif, par exemple de l'ordre de plusieurs degrés. Dans ce but, la longueur de l'arbre intermédiaire 4 doit être suffisante, cette longueur étant déterminée en fonction du couple à transmettre et donc à mesurer, et du décalage angulaire visé. Cette longueur de l'arbre intermédiaire 4 peut alors devenir une caractéristique dimensionnante du dispositif mécanique 1, voire de la boîte de transmission principale 100.

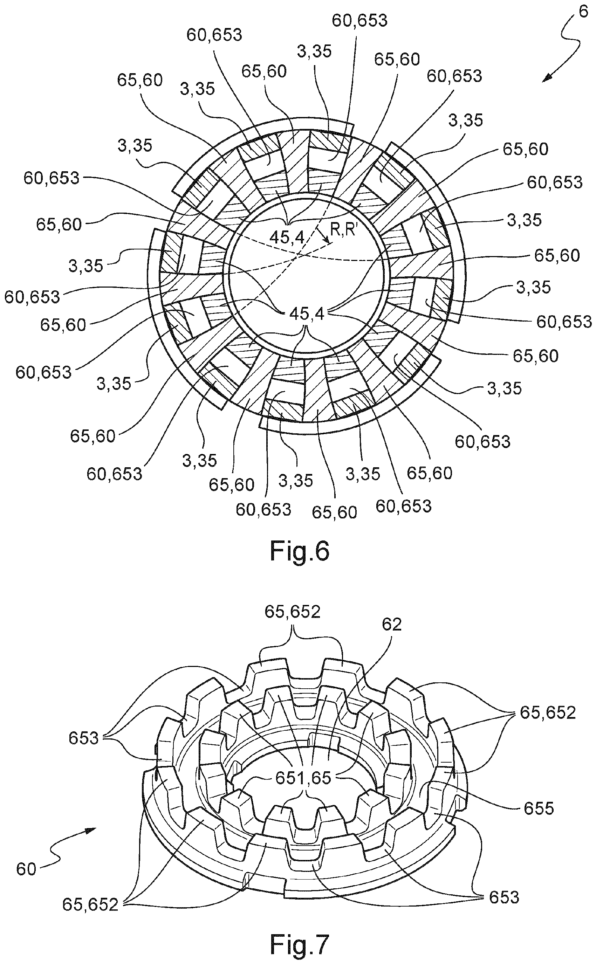

La figure 6 représente une vue en coupe, perpendiculairement à l'axe de rotation AX de la deuxième liaison mécanique 6 du dispositif mécanique 1 de la figure 2. Chaque espace interdent 653 accueille une première dent 45 et une deuxième dent 35. De plus, selon cet exemple, les premières dents 45 et les deuxièmes dents 35 sont de forme concave alors que les dents de liaison 65 sont de forme convexe. Les rayons R,R' de ces formes concave et convexe sont égaux. De la sorte, les formes de ces premières et deuxièmes dents 45,35 sont identiques et sont complémentaires de la forme des dents de liaison 65, permettant ainsi un fonctionnement optimal de la deuxième liaison mécanique 6.

Alternativement, les premières dents 45 et les deuxièmes dents 35 peuvent être de formes convexes et les dents de liaison 65 peuvent être de formes concaves.

La figure 7 représente une vue en perspective d'une variante de l'anneau d'entraînement 6. Selon cette variante, chaque dent de liaison 65 comporte radialement deux dents 651,652 séparées par un espace de séparation 655. Les deux dents 651,652 comporte alors une dent de liaison interne 651 et une dent de liaison externe 652 situées à l'extérieur des dents de liaison internes 651 au regard de l'axe de rotation AX. Les dents de liaison internes 651 coopèrent ainsi avec les premières dents 45 alors que les dents de liaison externes 652 coopèrent avec les deuxièmes dents 35.

Par ailleurs, les premières dents 45, les deuxièmes dents 35 et les dents de liaison 65 s'étendent chacune en azimut par rapport à l'axe de rotation AX entre deux faces inclinées. Chacune des faces est par exemple inclinée par rapport à une direction parallèle à l'axe de rotation AX selon un angle compris entre 5° et 15° afin notamment d'avoir un nombre de premières et deuxièmes dents 45,35 et de dents de liaison 65 suffisant pour transmettre le couple attendu entre le pignon d'entrée 2 et le pignon de sortie 3.

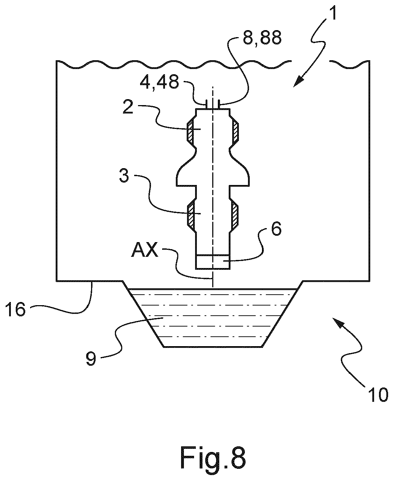

Enfin, la figure 8 représente une vue en coupe d'un exemple de boîte de transmission de puissance 10. Cette boîte de transmission de puissance 10 comporte un carter 16 dans lequel est agencé le dispositif mécanique 1 ainsi que d'autres éléments tournants et dispositifs de démultiplication non représentés et au fond duquel se trouve un liquide de lubrification 9 destiné à lubrifier ces différents éléments tournants et dispositifs de démultiplication.

Grâce au faible encombrement de la deuxième liaison mécanique 6, en particulier parallèlement à l'axe de rotation AX et malgré la présence du couplemètre 7, la deuxième liaison mécanique 6 peut être positionnée au-dessus du liquide de lubrification 9 lorsque la boîte de transmission de puissance 10 fonctionne et se trouve à une position de référence. Au sein d'un aéronef 100, cette position de référence est par exemple atteinte lorsque l'aéronef 100 repose un sol horizontal dans un repère terrestre.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention et des revendications.

## Revendications

1. Dispositif mécanique (1) comprenant un pignon d'entrée (2) et un pignon de sortie (3) mobiles en rotation autour d'un axe de rotation (AX), un arbre intermédiaire (4) s'étendant longitudinalement le long dudit axe de rotation (AX) d'une première extrémité proximale (41) jusqu'à une première extrémité distale (42), une première liaison mécanique (5) d'entraînement en rotation connectant ledit arbre intermédiaire (4) et ledit pignon d'entrée (2), une deuxième liaison mécanique (6) connectant la première extrémité distale (42) dudit arbre intermédiaire (4) et ledit pignon de sortie (3), le dispositif mécanique (1) comprenant un couplemètre (7) coopérant avec ledit arbre intermédiaire (4), dans lequel,
- ledit couplemètre (7) est un couplemètre à roue phonique muni d'un arbre de référence (8) s'étendant longitudinalement le long dudit axe de rotation (AX) d'une seconde extrémité proximale (81) jusqu'à une seconde extrémité distale (82), ledit arbre de référence (8) étant agencé au moins partiellement à l'intérieur dudit arbre intermédiaire (4) et étant coaxial audit arbre intermédiaire (4), ladite seconde extrémité distale (82) dudit arbre de référence (8) étant connectée audit arbre intermédiaire (4), ledit couplemètre (7) comportant au moins un index de mesure (48) solidaire dudit arbre intermédiaire (4) et agencé à ladite première extrémité proximale (41) ainsi qu'au moins un index de référence (88) solidaire dudit arbre de référence (8) et agencé à ladite seconde extrémité proximale (81),
- ledit arbre intermédiaire (4) est coaxial avec ledit pignon d'entrée (2) et avec ledit pignon de sortie (3) autour dudit axe de rotation (AX), et
- la deuxième liaison mécanique (6) comporte une série de premières dents (45) agencées sur ladite première extrémité distale (42) dudit arbre intermédiaire (4) et une série de deuxièmes dents (35) agencées sur ledit pignon de sortie (3), autour des premières dents (45) au regard de l'axe de rotation (AX), et **caractérisée en ce qu'**elle comporte un anneau d'entraînement (60) comportant une série de dents de liaison (65) séparées par des espaces interdents (653) radiaux, chaque première dent (45) et chaque deuxième dent (35) étant en contact avec lesdites dents de liaison (65) dans un espace interdent (653) radial, et un dispositif de fixation (66) liant axialement selon l'axe de rotation (AX) ledit anneau d'entraînement (60) avec ledit arbre intermédiaire (4) et ledit pignon de sortie (3).

2. Dispositif mécanique (1) selon la revendication 1,
dans lequel ladite première liaison mécanique (5) est une liaison permanente.

3. Dispositif mécanique (1) selon la revendication 1,
dans lequel ladite première liaison mécanique (5) est une liaison débrayable.

4. Dispositif mécanique (1) selon la revendication 3,
dans lequel ladite première liaison mécanique (5) comprend une roue libre (55) autorisant uniquement un entraînement dudit arbre intermédiaire (4) par ledit pignon d'entrée (2) dans un seul sens de rotation autour dudit axe de rotation AX.

5. Dispositif mécanique (1) selon l'une quelconque des revendications 1 à 4,
dans lequel chaque première dent (45), chaque deuxième dent (35) et chaque dent de liaison (65) s'étendent d'un pied de dent vers un sommet de dent parallèlement audit axe de rotation (AX).

6. Dispositif mécanique (1) selon l'une quelconque des revendications 1 à 5,
dans lequel lesdites premières dents (45) et lesdites deuxièmes dents (35) sont de forme convexe et les dites dents de liaison (65) sont de forme concave ou lesdites premières dents (45) et lesdites deuxièmes dents (35) sont de forme concave et lesdites dents de liaison (65) sont de forme convexe dans un plan perpendiculaire audit axe de rotation (AX).

7. Dispositif mécanique (1) selon l'une quelconque des revendications 1 à 6,
dans lequel lesdites premières dents (45), lesdites deuxièmes dents (35) et lesdites dents de liaison (65) s'étendent chacune en azimut par rapport audit axe de rotation (AX) entre deux faces inclinées, chacune desdites faces étant inclinée par rapport à une direction parallèle audit axe de rotation (AX) selon un angle compris entre 5° et 15°.

8. Dispositif mécanique (1) selon l'une quelconque des revendications 1 à 7,
dans lequel chaque espace interdent (653) accueille une première dent (45) et une deuxième dent (35).

9. Dispositif mécanique (1) selon l'une quelconque des revendications 1 à 8,
dans lequel chaque dent de liaison (65) comporte radialement deux dents (651,652) séparées par un espace de séparation (655), lesdites deux dents (651,652) comportant une dent de liaison interne (651) et une dent de liaison externe (652), lesdites dents de liaison externes (652) étant situées autour desdites dents de liaison internes (651) au regard de l'axe de rotation (AX), lesdites dents de liaison internes (651) coopérant avec lesdites premières dents (45) et lesdites dents de liaison externes (652) coopérant avec lesdites deuxièmes dents (35).

10. Dispositif mécanique (1) selon l'une quelconque des revendications 1 à 9,
dans lequel ledit dispositif de fixation (66) comporte une vis (67) et un écrou (68), ladite vis (67) comportant une surface cylindrique extérieure (671) filetée coopérant avec une surface cylindrique intérieure (47) taraudée dudit arbre intermédiaire (4), ledit anneau d'entraînement (60) étant agencé entre ladite vis (67) et ledit arbre intermédiaire (4), ledit écrou (68) comportant une surface cylindrique intérieure (681) taraudée coopérant avec une surface extérieure (37) filetée dudit pignon de sortie (3), ledit anneau d'entraînement (60) étant agencé entre ledit écrou (68) et ledit pignon de sortie (3).

11. Dispositif mécanique (1) selon l'une quelconque des revendications 1 à 10,
dans lequel ledit couplemètre (7) comporte un capteur (75) et un calculateur (73), ledit capteur (75) étant configuré pour mesurer des positions angulaires relatives dudit au moins un index de mesure (48) et dudit au moins un index de référence (88) par rapport audit axe de rotation (AX), ledit calculateur (73) étant configuré pour déterminer un couple mécanique transmis entre ledit pignon d'entrée (2) et ledit pignon de sortie (3) en fonction desdites positions angulaires relatives.

12. Dispositif mécanique (1) selon l'une quelconque des revendications 1 à 11,
dans lequel ledit au moins un index de mesure (48) et ledit au moins un index de référence (88) sont agencés dans un premier plan (P1) perpendiculaire audit axe de rotation (AX).

13. Dispositif mécanique (1) selon l'une quelconque des revendications 1 à 12,
dans lequel ledit arbre intermédiaire (4) est agencé au moins partiellement à l'intérieur dudit pignon d'entrée (2) et dudit pignon de sortie (3).

14. Dispositif mécanique (1) selon l'une quelconque des revendications 1 à 13,
dans lequel ledit arbre de référence (8) est lié audit arbre intermédiaire (4) par une liaison de type encastrement.

15. Boîte de transmission de puissance (10) comportant un dispositif mécanique (1) selon l'une quelconque des revendications 1 à 14.

16. Boîte de transmission de puissance (10) selon la revendication 15,
ladite boîte de transmission de puissance (10) comportant un carter dans lequel est agencé ledit dispositif mécanique (1) et au fond duquel est situé un liquide de lubrification (9), ladite deuxième liaison mécanique (6) étant positionné au-dessus dudit liquide de lubrification (9) lorsque ladite boîte de transmission de puissance (10) se trouve à une position de référence.

17. Aéronef (100) comportant une boîte de transmission de puissance (10) selon l'une quelconque des revendications 1 à 15, dans lequel ladite boîte de transmission de puissance (10) est agencée entre au moins un moteur (111,112) et au moins un rotor (105,106) dudit aéronef (100).

## Patentansprüche

1. Mechanische Vorrichtung (1) mit einem Eingangszahnrad (2) und einem Ausgangszahnrad (3), die um eine Drehachse (AX) drehbar sind, einer Zwischenwelle (4), die sich in Längsrichtung entlang der Drehachse (AX) von einem ersten proximalen Ende (41) zu einem ersten distalen Ende (42) erstreckt, einer ersten mechanischen Drehantriebsverbindung (5), die die Zwischenwelle (4) und das Eingangszahnrad (2) verbindet, einer zweiten mechanischen Verbindung (6), die das erste distale Ende (42) der Zwischenwelle (4) und das Ausgangszahnrad (3) verbindet, wobei die mechanische Vorrichtung (1) einen Drehmomentmesser (7) umfasst, der mit der Zwischenwelle (4) zusammenwirkt, wobei
- der Drehmomentmesser (7) ein Tonrad-Drehmomentmesser ist, der mit einer Referenzwelle (8) versehen ist, die sich longitudinal entlang der Drehachse (AX) von einem zweiten proximalen Ende (81) bis zu einem zweiten distalen Ende (82) erstreckt, wobei die Referenzwelle (8) zumindest teilweise innerhalb der Zwischenwelle (4) angeordnet ist und koaxial zu der Zwischenwelle (4) ist, wobei das zweite distale Ende (82) der Referenzwelle (8) mit der Zwischenwelle (4) verbunden ist, der Drehmomentmesser (7) mindestens einen Messindex (48), der mit der Zwischenwelle (4) fest verbunden und an dem ersten proximalen Ende (41) angeordnet ist, sowie mindestens einen Referenzindex (88), der mit der Referenzwelle (8) fest verbunden und an dem zweiten proximalen Ende (81) angeordnet ist, aufweist,
- die Zwischenwelle (4) mit dem Eingangszahnrad (2) und dem Ausgangszahnrad (3) koaxial zur Drehachse (AX) ist, und
- die zweite mechanische Verbindung (6) eine Reihe von ersten Zähnen (45), die an dem ersten distalen Ende (42) der Zwischenwelle (4) angeordnet sind, und eine Reihe von zweiten Zähnen (35) aufweist, die an dem Ausgangszahnrad (3) um die ersten Zähne (45) herum in Bezug auf die Drehachse (AX) angeordnet sind,
und **dadurch gekennzeichnet, dass** sie einen Mitnehmerring (60) mit einer Reihe von Verbindungszähnen (65), die durch radiale Zwischenräume (653) getrennt sind, wobei jeder erste Zahn (45) und jeder zweite Zahn (35) die Verbindungszähne (65) in einem radialen Zwischenraum (653) berührt, und eine Befestigungsvorrichtung (66) umfasst, die den Mitnehmerring (60) mit der Zwischenwelle (4) und dem Ausgangszahnrad (3) axial entlang der Drehachse (AX) verbindet.

2. Mechanische Vorrichtung (1) nach Anspruch 1,
wobei die erste mechanische Verbindung (5) eine permanente Verbindung ist.

3. Mechanische Vorrichtung (1) nach Anspruch 1,
wobei die erste mechanische Verbindung (5) eine lösbare Verbindung ist.

4. Mechanische Vorrichtung (1) nach Anspruch 3,
wobei die erste mechanische Verbindung (5) einen Freilauf (55) umfasst, der ein Antreiben der Zwischenwelle (4) um die Drehachse AX durch das Eingangszahnrad (2) nur in einer einzigen Drehrichtung zulässt.

5. Mechanische Vorrichtung (1) nach einem der Ansprüche 1 bis 4,
bei der sich jeder erste Zahn (45), jeder zweite Zahn (35) und jeder Verbindungszahn (65) von einem Zahnfuß zu einer Zahnspitze parallel zu der Drehachse (AX) erstreckt.

6. Mechanische Vorrichtung (1) nach einem der Ansprüche 1 bis 5,
bei der in einer Ebene senkrecht zur Drehachse (AX) die ersten Zähne (45) und die zweiten Zähne (35) konvex geformt sind und die Verbindungszähne (65) konkav geformt sind oder die ersten Zähne (45) und die zweiten Zähne (35) konkav geformt sind und die Verbindungszähne (65) konvex geformt sind.

7. Mechanische Vorrichtung (1) nach einem der Ansprüche 1 bis 6,
bei der sich die ersten Zähne (45), die zweiten Zähne (35) und die Verbindungszähne (65) jeweils azimutal bezüglich der Drehachse (AX) zwischen zwei geneigten Flächen erstrecken, wobei jede der Flächen bezüglich einer Richtung parallel zur Drehachse (AX) um einen Winkel zwischen 5° und 15° geneigt ist.

8. Mechanische Vorrichtung (1) nach einem der Ansprüche 1 bis 7,
bei dem jeder Zahnzwischenraum (653) einen ersten Zahn (45) und einen zweiten Zahn (35) aufnimmt.

9. Mechanische Vorrichtung (1) nach einem der Ansprüche 1 bis 8,
bei der jeder Verbindungszahn (65) radial zwei Zähne (651, 652) aufweist, die durch einen Trennraum (655) voneinander getrennt sind, wobei die beiden Zähne (651, 652) einen inneren Verbindungszahn (651) und einen äußeren Verbindungszahn (652) aufweisen, wobei die äußeren Verbindungszähne (652) um die inneren Verbindungszähne (651) herum in Bezug auf die Drehachse (AX) angeordnet sind, wobei die inneren Verbindungszähne (651) mit den ersten Zähnen (45) zusammenwirken und die äußeren Verbindungszähne (652) mit den zweiten Zähnen (35) zusammenwirken.

10. Mechanische Vorrichtung (1) nach einem der Ansprüche 1 bis 9,
bei der die Befestigungsvorrichtung (66) eine Schraube (67) und eine Mutter (68) umfasst, wobei die Schraube (67) eine zylindrische Außenfläche (671) mit Gewinde aufweist, die mit einer zylindrischen Innenfläche (47) mit Gewinde der Zwischenwelle (4) zusammenwirkt, wobei der Mitnehmerring (60) zwischen der Schraube (67) und der Zwischenwelle (4) angeordnet ist, die Mutter (68) eine innere zylindrische Oberfläche (681) mit Gewinde aufweist, die mit einer äußeren Oberfläche (37) mit Gewinde des Ausgangszahnrads (3) zusammenwirkt, wobei der Mitnehmerring (60) zwischen der Mutter (68) und dem Ausgangszahnrad (3) angeordnet ist.

11. Mechanische Vorrichtung (1) nach einem der Ansprüche 1 bis 10,
wobei der Drehmomentmesser (7) einen Sensor (75) und einen Rechner (73) umfasst, wobei der Sensor (75) konfiguriert ist, um relative Winkelpositionen des mindestens einen Messindex (48) und des mindestens einen Referenzindex (88) in Bezug auf die Drehachse (AX) zu messen, und der Rechner (73) konfiguriert ist, um ein zwischen dem Eingangszahnrad (2) und dem Ausgangszahnrad (3) übertragenes mechanisches Drehmoment in Abhängigkeit von den relativen Winkelpositionen zu bestimmen.

12. Mechanische Vorrichtung (1) nach einem der Ansprüche 1 bis 11,
bei der der mindestens eine Messindex (48) und der mindestens eine Referenzindex (88) in einer ersten Ebene (P1) angeordnet sind, die senkrecht zur Drehachse (AX) steht.

13. Mechanische Vorrichtung (1) nach einem der Ansprüche 1 bis 12,
wobei die Zwischenwelle (4) zumindest teilweise innerhalb des Eingangszahnrads (2) und des Ausgangszahnrads (3) angeordnet ist.

14. Mechanische Vorrichtung (1) nach einem der Ansprüche 1 bis 13,
bei der die Referenzwelle (8) mit der Zwischenwelle (4) durch eine formschlüssige Verbindung verbunden ist.

15. Kraftübertragungsgetriebe (10) mit einer mechanischen Vorrichtung (1) nach einem der Ansprüche 1 bis 14.

16. Kraftübertragungsgetriebe (10) nach Anspruch 15,
wobei das Kraftübertragungsgetriebe (10) ein Gehäuse aufweist, in dem die mechanische Vorrichtung (1) angeordnet ist und an dessen Boden sich eine Schmierflüssigkeit (9) befindet, wobei die zweite mechanische Verbindung (6) über der Schmierflüssigkeit (9) positioniert ist, wenn sich das Kraftübertragungsgetriebe (10) in einer Referenzposition befindet.

17. Luftfahrzeug (100) mit einem Kraftübertragungsgetriebe (10) nach einem der Ansprüche 1 bis 15,
wobei das Kraftübertragungsgetriebe (10) zwischen mindestens einem Triebwerk (111, 112) und mindestens einem Rotor (105, 106) des Luftfahrzeugs (100) angeordnet ist.

## Claims

1. Mechanical device (1) comprising an input pinion (2) and an output pinion (3) that are able to rotate about a rotation axis (AX), an intermediate shaft (4) extending longitudinally along said rotation axis (AX) from a first proximal end (41) to a first distal end (42), a first mechanical rotational drive connection (5) connecting said intermediate shaft (4) and said input pinion (2), a second mechanical connection (6) connecting the first distal end (42) of said intermediate shaft (4) and said output pinion (3), the mechanical device (1) comprising a torquemeter (7) cooperating with said intermediate shaft (4),
wherein
- said torquemeter (7) is a torquemeter with a phonic wheel provided with a reference shaft (8) extending longitudinally along said rotation axis (AX) from a second proximal end (81) to a second distal end (82), said reference shaft (8) being arranged at least partially inside said intermediate shaft (4) and being coaxial to said intermediate shaft (4), said second distal end (82) of said reference shaft (8) being connected to said intermediate shaft (4), said torquemeter (7) comprising at least one measuring index (48) secured to said intermediate shaft (4) and arranged at said first proximal end (41) and at least one reference index (88) secured to said reference shaft (8) and arranged at said second proximal end (81);
- said intermediate shaft (4) is coaxial with said input pinion (2) and with said output pinion (3) about said rotation axis (AX); and
- the second mechanical connection (6) comprises a series of first teeth (45) arranged on said first distal end (42) of said intermediate shaft (4) and a series of second teeth (35) arranged on said output pinion (3), around said first teeth (45) with respect to the rotation axis (AX),
and **characterised in that** it comprises a drive ring (6) comprising a series of connecting teeth (65) separated by radial intertooth spaces (643), each first tooth (45) and each second tooth (35) being in contact with said connecting teeth (65) in a radial intertooth space (653), and a fastening device (66) connecting said drive ring axially along the rotation axis (AX) with said intermediate shaft (4) and said output pinion (3).

2. Mechanical device (1) according to claim 1, wherein said first mechanical rotational drive connection (5) is a permanent connection.

3. Mechanical device (1) according to claim 1, wherein said first mechanical rotational drive connection (5) is a disengageable connection.

4. Mechanical device (1) according to claim 3, wherein said first mechanical rotational drive connection (5) comprises a free wheel (55) allowing said intermediate shaft (4) to be driven only in a single direction of rotation about said rotation axis (AX) by said input pinion (2).

5. Mechanical device (1) according to any one of claims 1 to 4,
wherein each first tooth (45), each second tooth (35) and each connecting tooth (65) extends parallel to said rotation axis (AX) from a tooth root to a tooth crest.

6. Mechanical device (1) according to any one of claims 1 to 5,
wherein said first teeth (45) and said second teeth (35) are convex and said connecting teeth (65) are concave or said first teeth (45) and said second teeth (35) are concave and said connecting teeth (65) are convex in a plane perpendicular to said rotation axis (AX).

7. Mechanical device (1) according to any one of claims 1 to 6,
wherein said first teeth (45), said second teeth (35) and said connecting teeth (65) each extend in azimuth with respect to said rotation axis (AX) between two inclined faces, each of said faces being inclined by an angle of between 5° and 15° in relation to a direction parallel to the rotation axis (AX).

8. Mechanical device (1) according to any one of claims 1 to 7,
wherein each intertooth space (653) receives a first tooth (45) and a second tooth (35).

9. Mechanical device (1) according to any one of claims 1 to 8,
wherein each connecting tooth (65) radially comprises two teeth (651, 652) separated by a separation space (655), said two teeth (651, 652) comprising an inner connecting tooth (651) and an outer connecting tooth (652), said outer connecting teeth (652) being situated around said inner connecting teeth (651) with respect to the rotation axis (AX), said inner connecting teeth (651) cooperating with said first teeth (45) and said outer connecting teeth (652) cooperating with said second teeth (35).

10. Mechanical device (1) according to any one of claims 1 to 9,
wherein said fastening device (66) comprises a screw (67) and a nut (68), said screw (67) comprising a threaded outer cylindrical surface (671) cooperating with a tapped inner cylindrical surface (47) of said intermediate shaft (4), said drive ring (60) being arranged between said screw (67) and said intermediate shaft (4), said nut (68) comprising a tapped inner cylindrical surface (681) cooperating with a threaded outer surface (37) of said output pinion (3), said drive ring (60) being arranged between said nut (68) and said output pinion (3).

11. Mechanical device (1) according to any one of claims 1 to 10,
wherein said torquemeter (7) comprises a sensor (75) and a calculator (73), said sensor (75) being configured to measure relative angular positions of said at least one measuring index (48) and said at least one reference index (88) with respect to the rotation axis (AX), said calculator (73) being configured to determine a mechanical torque transmitted between said input pinion (2) and said output pinion (3) as a function of said relative angular positions.

12. Mechanical device (1) according to any one of claims 1 to 11,
wherein said at least one measuring index (48) and said at least one reference index (88) are arranged in a first plane (P1) perpendicular to said rotation axis (AX).

13. Mechanical device (1) according to any one of claims 1 to 12,
wherein said intermediate shaft (4) is arranged at least partially inside said input pinion (2) and said output pinion (3).

14. Mechanical device (1) according to any one of claims 1 to 13,
wherein said reference shaft (8) is connected to said intermediate shaft (4) by a flush-mounted connection.

15. Power transmission box (10) comprising a mechanical device (1) according to any one of claims 1 to 14.

16. Power transmission box according to claim 15,
said power transmission box (10) comprising a housing wherein said mechanical device (1) is arranged and at the bottom of which there is a lubricating liquid (9), said second mechanical connection (6) being positioned above said lubricating liquid (9) when said power transmission box (10) is in a reference position.

17. Aircraft (100) comprising a power transmission box (10) according to any one of claims 1 to 15,
wherein said power transmission box (10) is arranged between at least one engine (111, 112) and at least one rotor (105, 106) of said aircraft (100).
